# EUROPEAN PATENT APPLICATION

(11) **EP 0 762 044 A1**
(43) Date of publication of application: **12.03.1997**
(21) Application number: 96202191.1
(22) Date of filing: 05.08.1996
(51) Int. Cl.: F16N 31/00

(54) **Ground protection system**

(30) Priority: 08.08.1995 GB 9516267
(71) Applicant: MINNESOTA MINING AND MANUFACTURING COMPANY, St. Paul, Minnesota 55133-3427 (US)
(72) Inventor: Fewtrell, James c/o 3M United Kingdom PLC, Co. Durham, DL5 6AF (GB)
(74) Representative: Hill, Cecilia Ann

(57) **Abstract**

A system is provided for protecting the ground beneath vehicle tracks 1, 2 from contamination by oil leaking from vehicles running on the tracks. The system comprises a plurality of trays 4 located between, and on either side of, the tracks. Each tray comprises a collecting portion 5 which contains an absorbent material 7, and a cover 6 provided with perforations 16 through which oil can flow into the collecting portion. Overflow ports 11 are provided in a side wall of the collecting portion so that rain water can leave the tray.

## Description

The present invention relates to a system for protecting areas of ground against contamination by pollutants deposited on the ground from above. The invention is particularly applicable to the protection of ground which is at risk of being contaminated by oil leaking from vehicles, for example ground over which vehicle tracks are laid.

It is generally recognised that certain areas of ground, especially beneath vehicle tracks (for example, railway and tram tracks), require protection against pollutants, particularly oil, that might leak from vehicles on the tracks and contaminate the ground and any ground water that may be present. Such protection is particularly important in areas where the water table is high and where vehicles may be parked for extended periods of time, for example railway sidings. In many locations, regulations are in force which specify the maximum quantities of contaminating substances such as hydrocarbons that may be present in the ground water.

Various systems have been proposed for protecting the ground beneath rail way or tram tracks. One system, described in US-A- 4 010 896, makes use of pre-cast basins located between and on each side of a pair of rails. Each basin has a centrally-located drain opening through which liquids collected in the basin can run into a drain trough below ground level. Another system, described in WO93/03303, uses collection trays which are also located between and on each side of a pair of rails and which contain an absorbent material. In that system, the trays and the absorbent material are intended to be removed after use.

It is an object of the present invention to provide an improved ground protection system for use especially (but not exclusively) beneath vehicle tracks.

The present invention provides a tray for use in protecting an area of ground from contamination by a pollutant deposited from above, the tray containing an absorbent material and having a pre-formed cover which permits access for the pollutant to the absorbent material.

In an embodiment of the invention, in which the tray is generally rectangular, the cover sits on steps in two opposed side walls of the tray and also has two opposed turned-down edges which sit on the floor of the tray.

The tray, which may be pre-formed from a plastics material, may have a non-slip finish. Preferably, the tray is formed from a fire-retardant material.

In the case in which the tray is generally rectangular, at least one side wall of the tray may have a portion which extends outwardly and upwardly from the tray. The other three sides of the tray may also have portions which extend upwardly and outwardly from the tray but to a lesser extent than the outwardly-extending portion of the said one side.

The present invention also provides a system for protecting an area of ground from contamination by a pollutant deposited from above, the system comprising a plurality of trays arranged adjacent one another over the area of ground to be protected, each tray containing an absorbent material and having a pre-formed cover which permits access for the pollutant to the absorbent material, wherein adjacent trays are connected to one another.

By way of example only, embodiments of the invention will be described with reference to the accompanying drawings, in which:
Fig. 1 is a plan view of a length of rail track provided with a ground protection system;
Fig. 2 is a cross-section through a collection tray, on the line II-II in Fig. 1;
Fig. 3 is a cross-section through a collection tray, on the line III-III in Fig. 1;
Figs. 4 to 6 are perspective views of components of the liquid collection system shown in Figs. 1 to 3;
Fig. 7 is a cross-section, on an enlarged scale, through the junction between adjacent collection trays;
Fig. 8 is a plan view of the container portion of another form of collecting tray, and
Fig. 9 is a plan view of one of the lids of the collecting tray of Fig. 8.

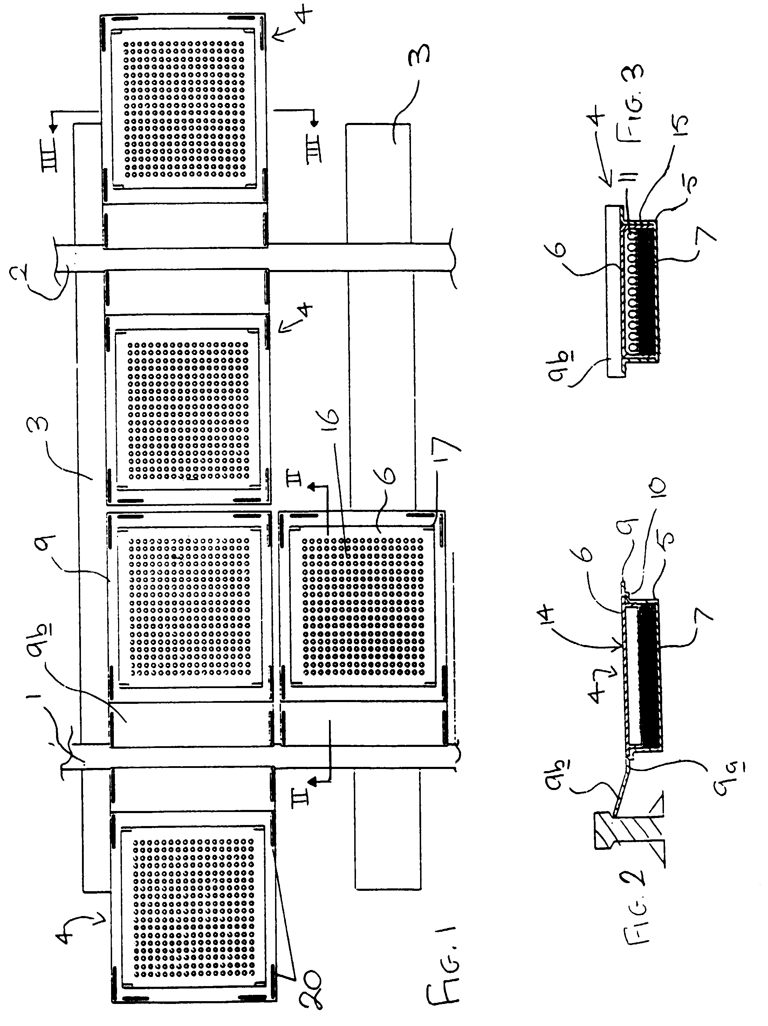

Fig. 1 shows a length of rail track comprising a pair of rails 1, 2 and sleepers 3 to which the rails are secured. The track is conventional and need not be described in detail. Between, and on each side of, the rails 1, 2 are a plurality of collection trays 4 which will be described below. The trays constitute a ground protection system which, without preventing rainwater reaching the ground, collects oil leaking from vehicles on the rails 1, 2 and thereby prevents that oil from being deposited on the ground and possibly contaminating ground water.

As shown in Fig. 1, the trays 4 are rectangular and are arranged in rows of four across the track, two of the trays in each row being located between the rails 1, 2 and the other two being located outside the rails, one on each side of the track. The two trays between the rails 1, 2 are contiguous, as are adjacent trays in adjacent rows. In Fig. 1, only one complete row of trays is shown, together with a single tray of an adjacent row. In practice, however, a plurality of rows would be employed, the number of rows being determined by the area of the ground that is to be protected.

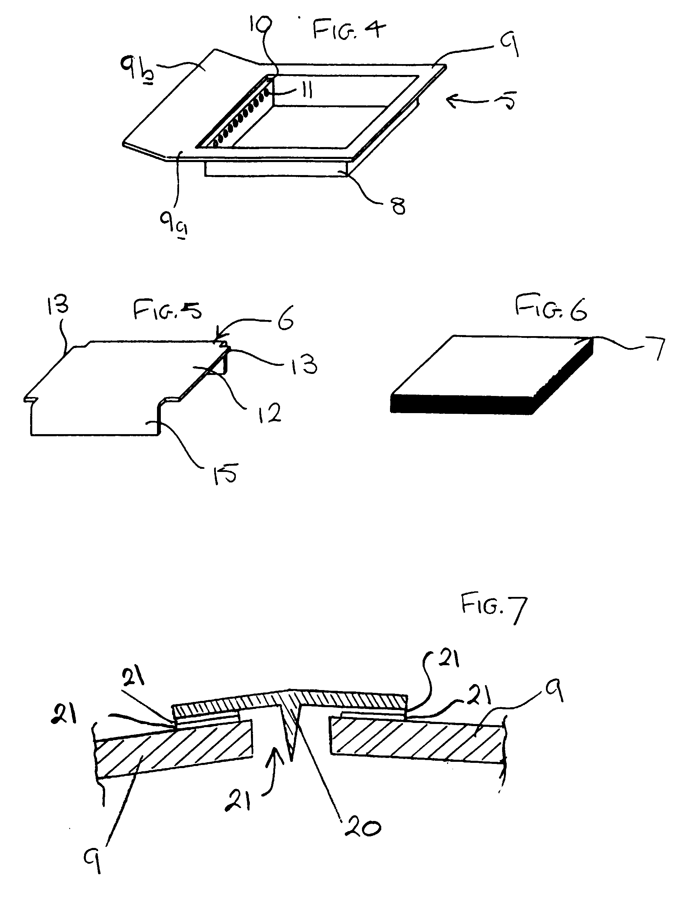

The trays 4 are all of the same construction and comprise a container portion 5 (shown on its own in Fig 4); a lid 6 (shown on its own in Fig. 5); and a block 7 of absorbent material (shown on its own in Fig. 6).

The container portion 5 (Fig. 4) has a rectangular sunken area 8 which contains the absorbent block 7, and around the top edge of which are outwardly-extending ledges 9. The ledges 9 are all inclined upwardly away from the sunken area 8 and one of them (9a) has a more steeply inclined extension 9b. Two opposed sides of the sunken area 8 are formed with steps 10 just below the top edge and each of those sides is also formed with a row of ports 11 positioned, just below the step 10, to be adjacent the top of the absorbent block 7. The container is thermo-formed from a suitable material, for example a thermoplastic polymer that has been treated so that it is fire retardant. A suitable polymer is polyethylene but polypropylene, polystyrene and nylon could also be used. Information on how polymers can be made fire retardant can be obtained from Chapter 6 of the report "Fire - Additives and Materials" by Dr. P.W. Dufton, dated May 1995 and made available by Rapra Technology Ltd of Shawbury, UK

The lid 6 (Fig. 5) is made from the same material as the container portion 5 and is also a thermo-formed component. The lid 6 comprises a flat cover portion 12 which is dimensioned to fit over the sunken area 8 with two opposed edges 13 sitting on the steps 10 as shown in Fig. 2. The upper surface 14 of the lid 6 is then flush with the top edge of the sunken portion and, to ensure that the lid is well supported on all sides, the other two edges 15 of the cover portion 12 are folded down at 90° and extend to rest on the floor of the sunken area 8 as shown in Fig. 3. That construction results in the lid having cut-away corners, as indicated at 17. The cover portion 12 is provided with perforations 16 over the greater part of its area (the perforations being shown in Fig. 1 but omitted from Fig 5).

The lid 6 is a push-fit on the container portion 5 but it could, alternatively, be formed so that it is a snap-fit. The lid is easily pushed into position on the container portion but can also be removed comparatively easily, if necessary with the aid of a suitable tool, when access to the interior of the container portion is required.

The upper surfaces of the lid 6 and the container ledges 9, respectively, are provided with a non-slip finish (not shown in the drawings).

The absorbent block 7 is formed from a conventional absorbent material which is hydrophobic and oleophilic (i.e. repels water and absorbs oil). Suitable materials are, for example, blown micro-fibre polypropylene or polyethylene (either chopped or in the form of layers) compressed into a block will fit into, and substantially fill, the sunken area 8 of the container portion 5 with the top surface of the block being adjacent the row of ports 11.

The trays 4 are installed between, and on either side of, the rails 1, 2 so that they will completely cover the area of ground to be protected. To that end, as already mentioned, adjacent trays between the rails are contiguous and so are adjacent trays on the outsides of the rails. On both sides of each rail, the respective trays are arranged so that the ledge extensions 9b are adjacent the rail and extend to fit under the overhang of the rail (as shown in Fig. 2) while clearing the bolts (not shown) that hold the rail to the sleepers 3. Adjacent trays are connected together by plates 20 which have been removed from Fig. 1 but one of which is shown in cross-section in Fig. 7. As can be seen from Fig. 7, the plate 20 is of T-shaped cross-section and extends across, and also down into, the gap 21 between the tray ledges 9. The under surfaces of the connecting plates 20 are provided with strips 21 of a suitable reclosable fastener arranged to engage similar strips 21 on the upper surfaces of the tray ledges 9. The plates 20 may, for example, be extruded thermoplastic components, and the strips 21 may, for example, be "Dual Lock"^{TM} SJ 3552 available from Minnesota Mining and Manufacturing Company of St. Paul, Minnesota, U.S.A. The connecting arrangement illustrated in Fig. 7 gives a degree of flexibility in the positioning of adjacent trays, enabling bends or obstacles in the track to be accommodated. The trays are, however, held to each other and also to the rails 1, 2, and can not be blown away or shaken out of position. If required, the connecting plates 20 could be extended to overlie the edges of the lids 6 of the trays and thus serve also to hold the lids in position.

The use of connecting plates 20 as illustrated in Fig. 7 is not essential, and any appropriate arrangement could be used to hold the trays 4 together and cover the gaps between them. It is, for example, possible to use a strong adhesive tape to hold the trays together, for example "Scotch"^{TM} vinyl tape available under the trade designation "471" from Minnesota Mining and Manufacturing Company of St. Paul, Minnesota, U.S.A.

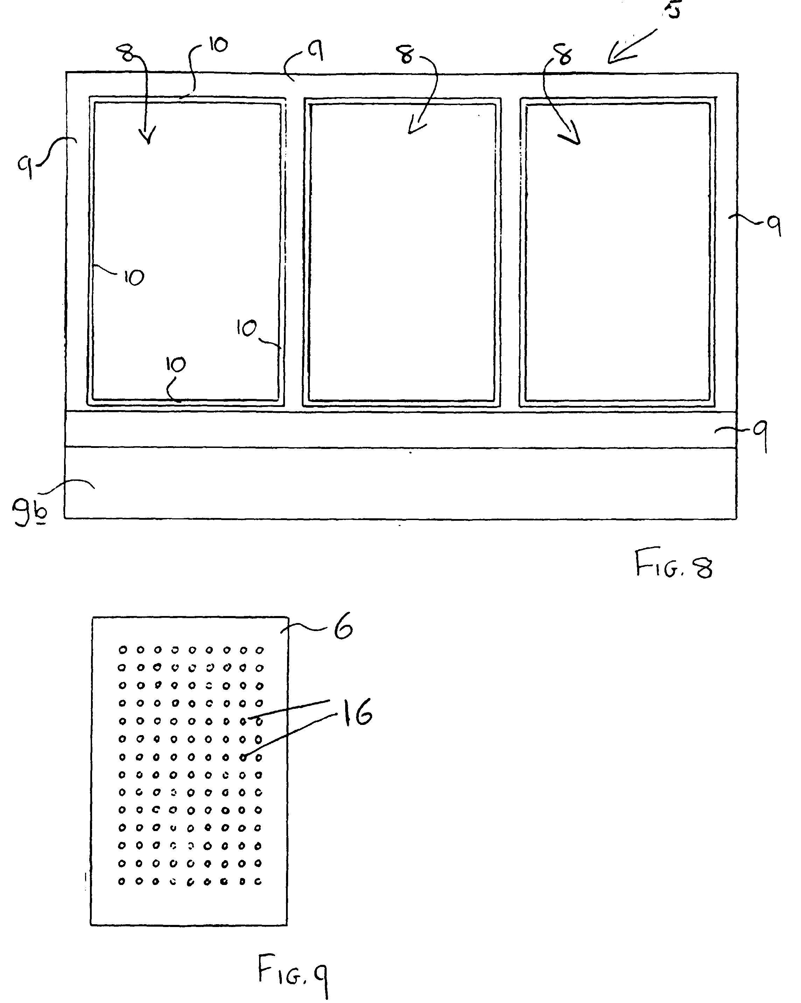

An alternative form of collecting tray 4 is illustrated, on a larger scale, in Figs. 8 and 9. The tray differs from those shown in Fig. 1 in that the container portion 5 (Fig. 8) comprises three sunken areas 8, each of which contains a respective absorbent block (not shown) and is provided with a respective lid 6 (Fig. 9). Each sunken area 8 also has respective rows of overflow ports 11 (not shown) to allow rainwater to leave the tray. The container portion 5 is, however, similar to that shown in Fig. 4 in that it has the outwardly extending ledges 9 and the ledge extension 9b that fits under the overhang of one of the rails 1, 2.

The lid 6 shown in Fig. 9 differs from that shown in Fig. 5 in that it does not have the turned-down edges 15 but is completely flat. In view of that, each of the sunken areas 8 of Fig. 8 has a step 10 on each of its four sides, on which the lid can sit.

The container portion 5 of Fig. 8 has a more rigid structure than that of Fig. 4 and that, in turn, enables the simpler form of lid 6 shown in Fig. 9 to be used. Typical dimensions of a tray 4, of the type shown in Figs. 8 and 9 and suitable for use on a standard European gauge (1500 mm) railway are as follows:
length x width: 120 cm x 75 cm
Width of ledges 9: 4 cm
Width of ledge extension 9b: 15 cm
Length x width x depth of each sunken area 8: 52 cm x 35 cm x 6.5 cm
Length x width x depth of each absorbent block 7: 50 cm x 33 cm x 4.0 cm
Diameter of overflow ports 11: 2.0 cm
Diameter of perforations 16: 1.0 cm

If oil, or any other contaminating fluid, should spill on to the trays 4 shown in Fig. 1 or in Figs. 8 and 9 (for example, by leaking from a vehicle running or standing on the rails 1, 2), it will either be guided by the inclined ledges 9 into the sunken areas 8 or will pass directly into the sunken areas through the perforations 16 in the lids 6. Once within the sunken area, the contaminating fluids will be absorbed and retained by the absorbent blocks 7. Rainwater will likewise pass into the sunken areas 8 of the trays but will not be absorbed by the blocks 7 and will finally flow out of the trays through the ports 11. The lids 6 prevent sources of ignition coming into contact with the absorbent blocks 7, and the air spaces between the upper surfaces of the blocks and the lids ensure that no wicking will occur if sources of ignition land on the latter. The lids 6 also protect the absorbent blocks from ultra-violet light.

The absorbent blocks 7 can readily be inspected by removing the lids 6 from the trays 4 and, when any of the blocks 7 have been fully utilised, they can readily be removed. The oil that has been absorbed by the blocks can be recovered, for example in a centrifuge, and the absorbent blocks can then be disposed of or returned to the trays for further use. The lids 6 of the trays are constructed so that they can be walked on for purposes of access, without collapsing onto the absorbent blocks within the trays and without presenting any undue hazard to workers. In particular, as already noted, the upper surfaces of the lids have a non-slip finish and are flush with the upper edges of the sunken areas 8 so that there are no edges on which workers could trip. If the trays are used in a location where they might be tampered with, it may be advantageous to design the lids 6 so that a tool is required to enable them to be removed. It may also be advantageous to link the trays together by a cable, passed from one tray to another through the ports 11, to prevent theft.

It will be appreciated that various modifications may be made to the individual collection trays 4 described above, and to the collection system as a whole. The particular shape of the individual collection trays 4 can be modified having regard to the location in which they are to be used, and the manner in which the lids 6 are located in the container portions 5 can also be changed. Moreover, the openings in the lids 6 need not always be in form of perforations 16; other forms of openings, for example louvres, could be employed. The form and nature of the absorbent material within the trays can also be changed having regard to the nature of the pollutant that is to be collected. The absorbent material need not, for example, always be in the form of a block as shown in Fig. 6 but could, for example, comprise several layers of sheet material. As regards the system as a whole, it will be apparent that the particular arrangement of the trays 4 shown in Fig. 1 is not essential. It would, for example, be possible to have more than two collection trays in a row between the rails, in which case only the trays adjacent the rails would be formed with the ledge extension 9b. If the ground protection system is used in a railway track which includes a central live electric rail, the trays 4 will need to be shaped to accommodate the supports of the central line.

A ground protection system of the type described above and illustrated in the drawings can be used to collect pollutants that will not dissolve in rainwater and for which an appropriate absorbent can be provided in the trays 4. The trays 4 are simple to install and can be moved and removed easily. The absorbent 7 can also be replaced easily. A system as shown in Fig. 1 employs a single design of tray and will not interfere with normal railway working. In particular, because the trays 4 are formed from a plastics material, they will not interfere with signalling systems and will be suitable for use with electrified lines. The trays can be walked on, and will protect the absorbent 7 from sources of ignition and from ultra-violet light without preventing the flow of rainwater into the ground. If desired, the trays can be washed to maintain a good appearance.

Ground protection systems of the type described above and shown in the drawings can be used with various types of rail tracks, for example, underground railway tracks as well as the tracks of trams, trolley buses and vehicles such as dock cranes. They can also be used in the service areas of vehicles which do not run on rails, for example areas in which vehicles such as tractors, busses and lorries may be left standing.

## Claims

1. A tray for use in protecting an area of ground from contamination by a pollutant deposited from above, the tray containing an absorbent material and having a pre-formed cover which permits access for the pollutant to the absorbent material.

2. A tray as claimed in claim 1, in which the cover is formed with a plurality of openings which permit access for the pollutant to the absorbent material.

3. A tray as claimed in claim 1 or claim 2, in which the cover is spaced apart from the absorbent material.

4. A tray as claimed in any one of the preceding claims, in which the cover is flush with the top of the sides of the tray.

5. A tray as claimed in any one of the preceding claims, in which the cover sits on at least one step in a side wall of the tray.

6. A tray as claimed in any one of the preceding claims, in which the cover has at least one turned-down edge which sits on the floor of the tray.

7. A tray as claimed in any one of the preceding claims, in which the tray is generally rectangular, and at least one side wall of the tray has a portion which extends outwardly and upwardly from the tray.

8. A tray as claimed in any one of the preceding claims, in which at least one port is formed in the tray, adjacent or above the upper surface of the absorbent material, to permit rainwater to flow from the tray.

9. A system for protecting an area of ground from contamination by a pollutant deposited from above, the system comprising a plurality of collection trays arranged over the area of ground to be protected, each tray being as claimed in any one of the preceding claims, and adjacent trays being connected to one another.

10. A system as claimed in claim 9, in which the trays are generally rectangular and adjacent sides of adjacent trays have portions which extend outwardly from the tray, the outwardly-extending portions being connected together by means which also cover the spaces between adjacent trays.

11. A system as claimed in claim 10, in which the connecting means also extend to hold the covers of the trays in position.

12. A system as claimed in any one of claims 9 to 11, in which the area of ground to be protected is beneath a vehicle track, and in which each tray adjacent a track has a portion which is formed to fit against the track.
